(19) Europäisches Patentamt
European Patent Office
Office européen des brevets

(11) Numéro de publication: **0 105 768**
**B1**

(12) # FASCICULE DE BREVET EUROPEEN

(45) Date de publication du fascicule du brevet: **16.03.88**

(51) Int. Cl.$^4$: **H 01 M 4/60**, H 01 M 6/14

(21) Numéro de dépôt: **83401712.1**

(22) Date de dépôt: **26.08.83**

(54) **Perfectionnement aux générateurs électrochimiques comportant un polymère organique comme matière active d'électrode.**

(30) Priorité: **01.09.82 FR 8214941**

(43) Date de publication de la demande:
**18.04.84 Bulletin 84/16**

(45) Mention de la délivrance du brevet:
**16.03.88 Bulletin 88/11**

(84) Etats contractants désignés:
**DE FR GB IT NL SE**

(56) Documents cités:
**EP-A-0 036 118**
**EP-A-0 058 469**
**JOURNAL OF THE ELECTROCHEM. SOC., vol. 129, no. 5, mai 1982, pages 1012,1013, Manchester, New Hampshire, US; R.A.BULL et al.: "Polymer films on electrodes. VII.Electrochemical behaviour at polypyrrole-coated platinum and tantalum electrodes"**
**IMB JOURNAL RES. DEVELOP., vol. 25, no. 1, janvier 1981, pages 42-50; A.DIAZ et al.: "(PtrPolypyrrole: A new organic electrode material"**

(73) Titulaire: **COMMISSARIAT A L'ENERGIE ATOMIQUE**
**31/33, rue de la Fédération**
**F-75015 Paris (FR)**

(72) Inventeur: **Genies, Eugène**
**La Biollette Rue Troussai**
**F-38120 Saint Egreve (FR)**

(74) Mandataire: **Mongrédien, André et al**
**c/o BREVATOME 25, rue de Ponthieu**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 105 768 B1

**Description**

La présente invention a pour objet un générateur électrochimique, utilisable notamment comme batterie.

De façon plus précise, elle concerne des générateurs électrochimiques dans lesquels on utilise un polymère organique comme matière active d'électrode dans l'un au moins des compartiments anodique ou cathodique du générateur.

Depuis quelques années, on a envisagé d'utiliser comme matière active d'électrode des matériaux organiques constitués, soit par des polymères qui stockent l'énergie par un phénomène du type "complexe par transfert de charges", soit par des polymères dopés tels que le polyacétylène (voir A. Schneider, W. Greatbatch, R. Mead, "Performance characteristics of a long-life pacemaker cell" 9th International Power Sources Sym. 651—659 (1974), F. Bénière, "La percée des piles plastiques", La Recherche 12, 1132, (1981)).

On peut aussi utiliser comme polymère organique conducteur électronique dans des générateurs de ce type, du polyparaphénylène, du polythiophène, du polypyrrole, de la polyaniline ou d'autres polymères très conjugés.

Cependant, bien que de tels générateurs possèdent des caractéristiques satisfaisantes, ils ont l'inconvénient de ne pouvoir présenter une capacité élevée lorsque l'on veut obtenir une décharge rapide de la batterie. En effet, pour avoir cette décharge rapide, on est obligé de limiter l'épaisseur de la matière active d'électrode, ce qui ne permet das d'obtenir une capacité élevée et limite l'utilisation de tels générateurs comme batteries de puissance pour le démarrage des véhicules automobiles.

La présente invention a précisément pour objet un générateur électrochimique qui pallie l'inconvénient précité.

Dans ce générateur électrochimique qui comprend un compartiment d'électrode positive et un compartiment d'électrode négative séparés par une membrane semi-perméable et contenant respectivement une matière active d'électrode positive, une matière active d'électrode négative et un électrolyte, la matière active d'électrode de l'un au moins desdits compartiments est constituée par un polymère organique conducteur électronique, et l'électrolyte de ce compartiment comprend un composé électroactif, soluble dans l'électrolyte et ayant un potentiel d'oxydoréduction voisin de celui du polymère organique conducteur électronique avec lequel il est en contact.

Grâce à la présence de ce composé électroactif au contact de la matière active d'électrode constituée par un polymère organique, on accélère le transport des électrons dans le polymère organique tout en améliorant également la diffusion dans ce polymère des contre-ions provenant de l'électrolyte. Le composé électroactif constitue un couple oxydoréducteur réversible dont le potentiel d'oxydoréduction est voisin de celui du polymère avec lequel il est en contact. Généralement, dans les exemples étudiés, ce potentiel est légèrement différent du potentiel d'oxydoréduction du polymère, et l'écart entre ces deux potentiels peut aller jusqu'à 500 mV.

Selon un premier mode de réalisation de l'invention, ce générateur électrochimique comprend un compartiment d'électrode positive et un compartiment d'électrode négative séparés par une membrane semi-perméable et contenant respectivement une matière active d'électrode positive, une matière active d'électrode négative et un électrolyte, la matière active d'électrode de l'un au moins desdits compartiments étant constituée par un polymère organique conducteur électronique, et il se caractérise en ce que, dans le compartiment de l'électrode positive, la masse active positive d'électrode est un polymère organique ayant une épaisseur d'au moins 10 µm et en ce que l'électrolyte de ce compartiment comprend $10^{-3}$ à 1 mol/l d'un composé électroactif soluble dans l'électrolyte et ayant un potentiel d'oxydoréduction dont l'écart avec le potentiel d'oxydoréduction du polymère organique de ce compartiment est d'au plus $\pm$ 500 mV, le composé électroactif étant choisi parmi le ferrocène et ses dérivés, les dérivés méthoxylés du benzène, les hydrazines de formule

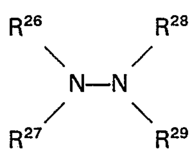

dans laquelle $R^{26}$, $R^{27}$, $R^{28}$ et $R^{29}$ qui peuvent être identiques ou différents représentent un radical alkyle ou phényle, le diphényl-9,10-anthracène et ses dérivés méthoxylés, le di-naphthyl-9,10-anthracène et ses dérivés méthoxylés, les composés hétérocycliques aromatiques et les amines aromatiques.

Selon un second mode de réalisation de l'invention, ce générateur électrochimique comprend un compartiment d'électrode positive et un compartiment d'électrode négative séparés par une membrane semi-perméable et contenant respectivement une matière active positive d'électrode, une matière active négative d'électrode et un électrolyte, la matière active d'électrode de l'un au moins desdits compartiments étant constituée par un polymère organique, conducteur électronique, et il se caractérise en ce que, dans le compartiment de l'électrode négative, la matière active négative d'électrode est un polymère organique ayant une épaisseur d'au moins 10 µm et en ce que l'électrolyte de ce compartiment comprend $10^{-3}$ à 1 mol/l d'un composé électroactif, soluble dans l'électrolyte et ayant un potentiel d'oxydoréduction dont

l'écart avec le potentiel d'oxydoréduction du polymère organique de ce compartiment est d'au plus ± 500 mV, le composé électroactif étant choisi parmi les hydrocarbures aromatiques polycycliques, les dérivés quinoniques, les dérivés nitrés aromatiques substitués par des groupes alkyle et le ferrocène phénylcétone.

Les dérivés du ferrocène utilisés dans l'invention répondent à la formule:

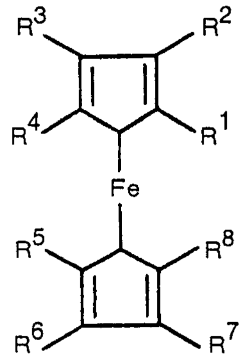

(I)

dans laquelle $R^1$, $R^2$, $R^3$, $R^4$, $R^5$, $R^6$, $R^7$ et $R^8$ qui peuvent être identiques ou différents représentent l'hydrogène, $NO_2$, $SO_2$, CN, $OCH_3$, Cl, F, SCN, OCN,

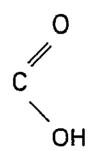 , 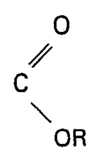 , 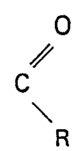 , $SO_2R$, 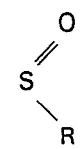 , 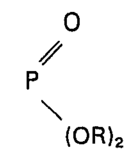 ,

OR, SR ou R avec R représentant un radical alkyle ou aryle.

Avantageusement, lorsque le polymère organique conducteur électronique est du polypyrrole, le composé électroactif est le ferrocène, c'est-à-dire le composé de formule (I) dans laquelle $R^1$, $R^2$, $R^3$, $R^4$, $R^5$, $R^6$, $R^7$ et $R^8$ représentent l'hydrogène. Lorsqu'on utilise des dérivés du ferrocène répondant à la formule I, on choisit la nature des groupements $R^1$ à $R^8$ de manière à adapter le potentiel d'oxydoréduction du dérivé de ferrocène au polymère utilisé comme matière positive d'électrode.

On a déjà étudié l'influence d'électrodes en polypyrrole de 0,5 à 2 µm d'épaisseur ou de 0,32 µm d'épaisseur sur les propriétés électrochimiques de composés électroactifs tels que le ferrocène, la phénothiazine, le nitrobenzène et le chloranile comme il est décrit dans IBM J. Res. Develop., Vol. 25, N° 1 (janvier 1981), pages 42—50, et dans J. Electrochem. Soc., Vol. 129, N° 5 (mai 1982), pages 1009—1014.

Les dérivés méthoxylés du benzène susceptibles d'être utilisés dans l'invention répondent à la formule:

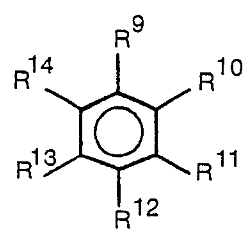

(II)

dans laquelle $R^9$, $R^{10}$, $R^{11}$, $R^{12}$, $R^{13}$, $R^{14}$ qui peuvent être identiques ou différents, représentent l'hydrogène, un radical méthyle ou un radical méthoxy à condition que l'un au moins des $R^9$, $R^{10}$, $R^{11}$, $R^{12}$, $R^{13}$, $R^{14}$ représente le radical méthoxy.

Les composés aromatiques hétérocycliques susceptibles d'être utilisés répondent à la formule:

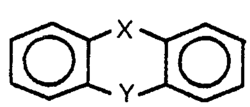

(III)

dans laquelle X et Y qui peuvent être identiques ou différents représentent NH, N-phényle, N-alkyl, O ou S. On peut aussi utiliser les dérivés méthoxylés de ces composés hétérocycliques aromatiques. A titre d'exemple de composé, on peut citer la phénothiazine (composé de formule III avec X=NH et Y=S).

Les amines aromatiques susceptibles d'être utilisées sont les triphénylamines, les benzidines, les paraphénylène diamines et les hydrazines.

Les triphénylamines répondent à la formule:

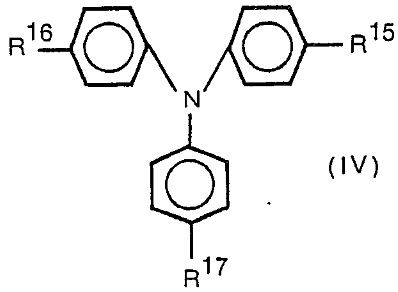

(IV)

dans laquelle $R^{15}$, $R^{16}$ et $R^{17}$ qui peuvent être identiques ou différents, représentent l'hydrogène, Cl, Br, F, $NO_2$, $OCH_3$, $SO_2$, CN, SCN, OCN,

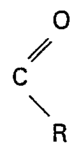 , $SO_2R$, 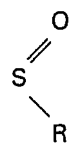 , 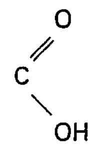 , 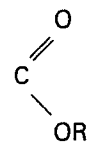 , 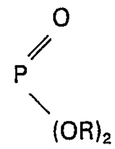 ,

OR, SR ou R avec R représentant un radical alkyle ou aryle.

Les benzidines susceptibles d'être utilisées répondent à la formule:

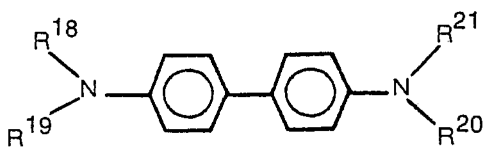

(V)

dans laquelle $R^{18}$, $R^{19}$, $R^{20}$, $R^{21}$ qui peuvent être identiques ou différents, représentent l'hydrogène, un radical alkyle ou un radical phényle.

Les paraphénylènediamines susceptibles d'être utilisées, répondent à la formule:

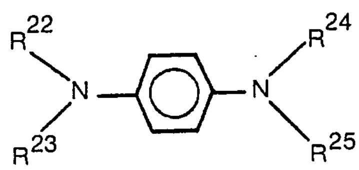

(VI)

dans laquelle $R^{22}$, $R^{23}$, $R^{24}$ et $R^{25}$ qui peuvent être identiques ou différents, représentent l'hydrogène un radical alkyle ou un radical phényle.

On peut utiliser par exemple la tétraphényl paraphénylènediamine, c'est-à-dire le composé de formule VI avec $R^{22}$, $R^{23}$, $R^{24}$ et $R^{25}=C_6H_5$.

Les hydrazines utilisables répondent à la formule:

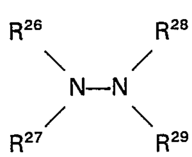

(VII)

dans laquelle $R^{26}$, $R^{27}$, $R^{28}$ et $R^{29}$ qui peuvent être identiques ou différents représentent un radical alkyle ou phényle.

Dans les composés électroactifs de l'invention, les radicaux alkyle susceptibles d'être utilisés sont des groupes alkyle linéaires ou ramifiés en $C_1$ à $C_{10}$ tels que méthyle, éthyle, propyle, butyle, etc.

Les radicaux, aryle susceptibles d'être utilisés sont les radicaux phényle, benzyle, etc.

Lorsque le polymère organique en contact avec le composé électroactif constitue la matière négative d'électrode, on utilise, selon le deuxième et éventuellement selon le premier mode de réalisation de l'invention, comme composés électroactifs dans le compartiment d'électrode négative:

— des hydrocarbures polycycliques aromatiques tels que le naphtalène, l'anthracène, le phénanthrène, le pyrène, le chrysène, et le rubène,

— des dérivés quinoniques tels que la benzophénone, l'anthraquinone et la benzoquinone, etc.,

— des dérivés nitrés aromatiques tels que le mononitrobenzène, les dinitrobenzènes et les trinitrobenzènes, substitués par des groupes alkyle, par exemple le trinitromésitylène, le dinitromésitylène, le nitromésitylène, le dinitrodurène et le nitrodurène.

Lorsque la matière active négative est constituée à la fois de polymère et de lithium, il apparaît que ces additifs peuvent également jouer le rôle de brillanteur pour le dépôt de lithium et éviter la formation de dendrites.

Selon l'invention, on choisit de plus le composé électroactif en fonction de son coefficient de diffusion dans la matière active polymère organique de façon à obtenir la diffusion la plus rapide des espèces oxydées ou réductrices dans le polymère. Lorsque le polymère organique est du polypyrrole, on a trouvé que le ferrocène permettait d'atteindre un coefficient de diffusion de l'ordre $10^{-8}cm^2.s^{-1}$, et de gagner ainsi un facteur 50 par rapport au système en l'absence de ferrocène où le coefficient de diffusion est de l'ordre de 2 à $5.10^{-10}cm^2.s^{-1}$, dans le cas où l'on utilise comme électrolyte du perchlorate de lithium.

Selon l'invention, l'addition d'une faible quantité de composé électroactif à l'électrolyte est suffisante pour améliorer de façon sensible les caractéristiques électriques du générateur électrochimique. Cette quantité de composé électroactif utilisée est de $10^{-3}$ à 1 $mol.l^{-1}$ d'électrolyte.

Selon l'invention, lorsque les matières actives d'électrode présentes dans chacun des compartiments anodique et cathodique sont des polymères organiques conducteurs électroniques, on peut ajouter dans chacun des compartiments un composé électroactif présentant les caractéristiques précitées, c'est-à-dire un potentiel d'oxydoréduction voisin de celui du polymère avec lequel il est en contact, à condition d'utiliser des composés électroactifs différents dans chacun des deux compartiments ou un composé électroactif à deux sites électroactifs tel que le ferrocène phényl cétone.

Dans ce cas, l'électrolyte du compartiment d'électrode positive comprend un composé électroactif, soluble dans l'électrolyte et ayant un potentiel d'oxydoréduction voisin de celui du polymère organique du compartiment d'électrode positive, et l'électrolyte du compartiment d'électrode négative comprend un composé électroactif différent de celui du compartiment d'électrode positive, soluble dans l'électrolyte et ayant un potentiel d'oxydoréduction voisin de celui du polymère organique présent dans le compartiment d'électrode négative.

Selon l'invention, l'une des matières actives d'électrode est avantageusement du polypyrrole c'est-à-dire un polymère de pyrrole ou d'un dérivé du pyrrole, ou un copolymère du pyrrole et/ou de dérivés du pyrrole.

Ce polypyrrole répond à la formule suivante:

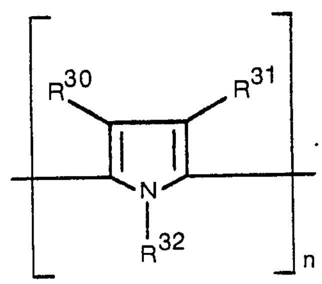 (VIII)

dans laquelle $R^{30}$, $R^{31}$ et $R^{32}$ qui peuvent être identiques ou différents, représentent un atome d'hydrogène, un groupement choisi parmi $NO_2$, $SO_2$, CN, $OCH_3$, Cl et F,

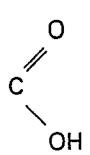 , 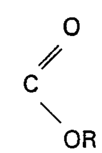 , SCN, OCN, 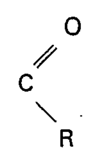 , $SO_2R$, 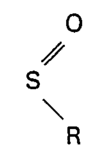 , 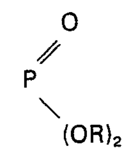 ,

SR (avec R = radical alkyl, aryle) ou un radical choisi parmi les radicaux alkyles et aryles comportant éventuellement un ou plusieurs substituants choisis dans le groupe comprenant $NO_2$, $SO_2$, CN, $OCH_3$, Cl et F, SCN, OCN,

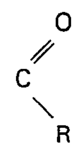 , $SO_2R$, 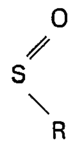 , 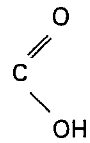 , 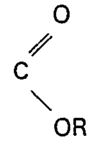 , 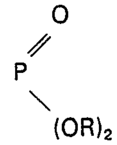 ,

SR (avec R = radical alkyl, aryle) et n est un nombre supérieur à 5 et de préférence compris entre 5 et 200.000.

Les radicaux alkyles susceptibles d'être utilisés sont des groupes alkyles linéaires ou ramifiés en $C_1$ à $C_{10}$ tels que méthyle, éthyle, propyle, butyle.

A titre de radicaux aryles susceptibles d'être utilisés, on peut citer les radicaux phényle, benzyle, etc.

Ce polymère peut être obtenu par polymérisation du pyrrole de formule:

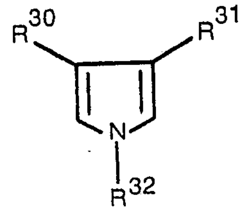

(IX)

dans laquelle $R^{30}$, $R^{31}$ et $R^{32}$ ont la signification donnée ci-dessus. Cette polymérisation peut être réalisée soit par voie chimique, soit par voie électrochimique.

Pour l'obtention du polypyrrole par voie chimique, on utilise des agents oxydants pour polymériser le pyrrole de formule (IX) en solution dans un solvant approprié; le polymère obtenu est précipité sous la forme d'une poudre qui peut ensuite être agglomérée, par exemple par frittage, pour constituer la matière active de l'électrode. Les agents oxydants utilisés sont des agents dont le potentiel redox est proche de celui du pyrrole (0,7Vs $Ag/Ag^+$).

A titre d'exemples de tels agents oxydants, on peut citer le perchlorate ferrique, le sulfate ferrique, le nitrate double d'ammonium et de cérium, le persulfate d'ammonium et les sels de cations ou radicaux cations organiques, par exemple le perchlorate de méthyl-10 phénothiazinium.

Les solvants utilisés peuvent être très divers. Ainsi, on peut utiliser de l'eau, des solutions aqueuses d'acides tels que l'acide sulfurique, l'acide perchlorique et des solvants organiques comme l'acétonitrile, le méthanol, le dichlorométhane.

Pour obtenir le polypyrrole par voie électrochimique, on dépose celui-ci sur une électrode à partir d'une solution électrolytique contenant le pyrrole de formule (IX) ou encore un oligomère formé à partir de celui-ci, un électrolyte support et un solvant, en faisant passer un courant électrique entre cette électrode et une contre électrode immergée également dans la solution électrolytique.

Dans ce cas, la polymérisation a lieu par oxydation du monomère sur l'électrode, et on peut contrôler les propriétés de conductivité électrique, d'adhérence et de morphologie du polymère déposé en choisissant de façon appropriée le solvant, l'électrolyte-support et le matériau d'électrode et en règlant par ailleurs la densité de courant.

Les électrolytes supports susceptibles d'être utilisés sont des sels tels que le perchlorate de lithium $LiClO_4$, l'hexafluorophosphate de sodium $NaPF_6$, le borofluorure de tétraéthyl ammonium $N(C_2H_5)_4BF_4$ et le chlorure de tétraéthylammonium $N(C_2H_5)_4Cl$.

Les solvants peuvent être également très divers et l'on peut utiliser par exemple l'acétonitrile, le carbonate de propylène, le méthanol et l'eau.

Ce mode de préparation du polypyrrole par voie électrochimique présente l'avantage de conduire directement à l'obtention d'une couche de polypyrrole déposée sur une électrode qui peut constituer le collecteur de courant du générateur électrochimique, ce qui combine l'avantage d'une synthèse simple et peu coûteuse avec l'obtention d'une bonne cohésion entre le polypyrrole et le collecteur de courant.

Par ailleurs, on obtient directement dans ce cas, du polypyrrole dopé par l'anion du sel servant d'électrolyte support. De ce fait, lorsqu'on utilise ce polypyrrole comme matière active d'électrode positive, il n'est pas nécessaire de charger tout d'abord le générateur.

Dans le générateur électrochimique de l'invention, la matière active d'électrode constituée par le polymère organique conducteur électronique est associée intimement à un collecteur de courant constitué généralement par une plaque ou une grille. Les matériaux susceptibles d'être utilisés pour former ce collecteur de courant sont les métaux, par exemple le nickel ou l'acier inoxydable sous la forme de plaques ou de grilles, le graphite sous la forme de tissu ou de plaque, et les materiaux conducteurs organiques tels que le polyacétylène $(CH)_x$.

L'autre matière active d'électrode peut être constituée par un métal réactif tel que le lithium, par un polymère organique conducteur électronique qui peut être identique ou différent du polymère constituant la première matière active d'électrode. On peut aussi utiliser d'autres composés tels que le graphite ou des matériaux composites, par exemple des céramiques telles que l'oxyde d'étain, l'oxyde d'indium et l'oxyde de titane, dopées au fluor ou à l'antimoine.

Généralement, on utilise un métal réactif tel que le lithium.

Cette autre matière active d'électrode est associée également à un collecteur de courant qui peut être réalisé de la même façon et en les mêmes matériaux que le collecteur de courant de la première matière active d'électrode.

Dans le générateur électrochimique de l'invention, l'électrolyte est avantageusement constitué par une solution non aqueuse ou par un électrolyte solide tel qu'un polyoxyde d'éthylène, à condition que l'électrolyte du compartiment contenant le composé électroactif soit liquide.

A titre d'exemple, on peut utiliser comme électrolyte une solution d'au moins un sel de lithium tel que le perchlorate, le tétrafluoborate, le tétrachloroaluminate, l'hexafluorophosphate ou l'hexafluoroarséniate de lithium, dans un solvant organique.

Les solvents organiques les plus divers ainsi que leurs mélanges peuvent être utilisés. A titre d'exemples de tels solvants, on peut citer les éthers linéaires tels que le diméthoxyéthane, les éthers cycliques tels que le tétrahydrofurane et le dioxolane, et des esters comme le carbonate de propylène.

Généralement, la concentration en sel de lithium du solvant est de 1 à 3 $mol.l^{-1}$.

Dans le générateur électrochimique de l'invention, la membrane semi-perméable qui sépare les deux compartiments anodique et cathodique a pour fonction d'empêcher la migration des espèces oxydées ou réduites de l'additif formées dans le compartiment où cet additif a été ajouté, tout en restant perméable aux ions de l'électrolyte. Ainsi, lorsque le composé électroactif est ajouté dans le compartiment d'électrode négative, la membrane doit être imperméable à l'espèce réduite du composé électroactif, alors que dans le cas où ce composé est ajouté dans le compartiment d'électrode positive, cette membrane doit être imperméable à l'espèce oxydée du composé électroactif. Lorsque le composé électroactif est du ferrocène, cette membrane semiperméable peut être réalisée en Nafion.

D'autres caractéristiques et avantages de l'invention apparaitront mieux à la lecture de la description qui suit, donnée bien entendu à titre illustratif et non limitatif, en référence au dessin annexé sur lequel:

— la figure 1 représente en coupe verticale un générateur électrochimique selon l'invention, et

— la figure 2 est un diagramme illustrant les courbes de voltamétrie cyclique obtenues avec un générateur selon l'invention comprenant du polypyrrole et du ferrocène (courbe 1) et un générateur utilisant seulement du polypyrrole (courbe 2) comme masse active positive.

Sur la figure 1, le générateur comprend un boîtier étanche 1 composé de deux parties la et lb et réalisé par exemple en polyéthylène. A l'intérieur de ce boîtier, on a disposé successivement un premier collecteur de courant 3 en acier inoxydable, une matière active positive 5 constitué par un film de polypyrrole de 10 µm d'épaisseur, une membrane semiperméable 7 réalisée en Nafion® une matière séparatrice 9 en fibres minérales, une matière active négative 11 constituée par du lithium et un deuxième collecteur de courant 13 en acier inoxydable. La membrane en Nafion® 7 délimite à l'intérieur du boîtier un compartiment d'électrode positive 15 et un compartiment d'électrode négative 17. Chacun des compartiments est rempli d'électrolyte constitué par une solution de perchlorate de lithium dans du carbonate de propylène à une concentration en perchlorate de lithium de 2 $mol.l^{-1}$, qui contient de plus $10^{-2}$ $mol.l^{-1}$ de ferrocène uniquement dans le compartiment 15 l'électrode positive. Ce compartiment est anodique pendant la charge et cathodique pendant la décharge.

On précise que plusieurs éléments de ce type peuvent être mis en série pour former un accumulateur électrochimique.

Dans cet exemple, la matière active positive 5 constituée par du polypyrrole a été obtenue par polymérisation électrolytique de pyrrole de formule:

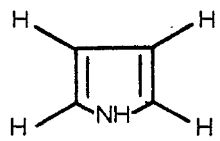

(X)

dans un solvant constitué par du carbonate de propylène ou de l'acétonitrile contenant environ 1 $mol.l^{-1}$ de perchlorate de lithium comme électrolyte-support et en utilisant comme électrode une grille d'acier inoxydable et une contre-électrode en lithium ou en acier inoxydable. Dans ces conditions, en opérant sous une densité de courant de 0,2/$mA.cm^{-2}$, on a obtenu un dépôt électrolytique de polypyrrole dopé par $ClO_4^-$ de 10 µm d'épaisseur sur l'électrode constituée par la grille d'acier inoxydable. Cette grille est soudée ensuite au collecteur 3 en acier inoxydable qui présente une surface de 16 $cm^2$.

La matière active négative 11 qui est constituée par du lithium a été déposée par électrolyse sur une grille en acier inoxydable qui est elle aussi soudée sur le deuxième collecteur de courant 13 en acier inoxydable.

Comme on l'a représenté sur le dessin, le premier collecteur de courant 3 constitue le pôle positif du générateur et le deuxième collecteur de courant 13 constitue le pôle négatif du générateur; des connexions sortant du boîtier 1 permettent de relier respectivement les collecteurs de courant 3 et 13 à un générateur électrique ou à un circuit d'utilisation.

Ce générateur présente une force électromotrice de 3,3 V avec une densité de courant d'environ 1 milliampère/$cm^2$. Il peut être déchargé totalement en 3 min. alors que ceci ne peut être obtenu avec un générateur ne comportant pas de ferrocène dans le compartiment 15, que lorsque le dépôt de polypyrrole ne dépasse pas 2,5 µm, naturellement avec une densité de courant bien plus faible. Ainsi, grâce à l'invention, on peut obtenir la décharge dans les mêmes conditions, mais en augmentant la puissance de la batterie d'un facteur voisin de 4.

Sur la figure 2, on a représenté les courbes de voltamétrie cyclique réalisées avec une vitesse de balayage de 0,1 $V.s^{-1}$ obtenues avec la masse active d'un générateur du même type comportant (pour la courbe 1) une couche de polypyrrole de $3.10^{-2}$ µm d'épaisseur, un électrolyte constitué par de l'acétonitrile ayant une concentration en perchlorate de lithium de 0,1 $mol.1^{-1}$ et du ferrocène à une concentration de $1.5.10^{-3}mol.l^{-1}$ dans le compartiment d'électrode positive. La courbe 2 a été obtenue dans les mêmes conditions que la courbe 1 mais sans adjonction de ferrocène dans le compartiment d'électrode positive. L'enregistrement de ces courbes est réalisé grâce à un potentiostat. Les potentiels sont contrôlés par rapport à l'électrode de référence $Ag/Ag^+$ $10^{-2}$ M. Sur cette figure, les pics $O_1$ et $R_1$ de la courbe 1 correspondent au couple oxydoréducteur du ferrocène dans le polymère. $O_1$ est le pic d'oxydation du ferrocène en ferricinium, $R_1$ est le pic de réduction du ferricinium dans le polymère. La courbe 2 représente

le système oxydoréducteur du polymère en l'absence de ferrocène. $O_2$ est le pic d'oxydation du polymère neutre. Son potentiel est une estimation du potentiel d'oxydation du polymère. $R_2$ est le pic de réduction du polymère oxydé. La différence de potentiel entre $O_2$ et $R_2$ est voisin de 200 mV. Cette différence traduit la lenteur du système électrochimique du polymère et conduit à une limite dans la puissance des batteries. En effet, si le système du polymère était NERNSTIEN et obéissait aux lois de la thermodynamique, la différence de potentiel des pics $O_2$ et $R_2$ devrait être égale à zéro.

En présence de ferrocène, les pics $O_2$ et $R_2$ sont remplacés sur la courbe 1 par $O_2'$ et l'épaulement $R_2'$. LLes positions de $O_2'$ et $O_2$ soint voisines, en revanche la valeur du potentiel de $R_2'$ s'est rapprochée de celle de $O_2'$ et la différence de potentiel entre $O_2'$ et $R_2'$ est pratiquement nulle. C'est ce qui explique que l'on pourra obtenir une décharge de batterie rapide, car le système oxydoréducteur du polymère présente maintenant les caractéristiques d'un comportement thermodynamique sans limitation cinétique apparente.

Les exemples 1 à 7 qui suivent illustrent des variantes de réalisation du générateur électrochimique selon l'invention.

Dans tous ces exemples, on utilise la même structure de générateur que celle représentée sur la figure 1, avec des collecteurs de courant 3 et 13 en acier inoxydable, une membrane semi-perméable 7 en Nafion®, une matière séparatrice 9 en fibres minérales et un électrolyte constitué par une solution de perchlorate de lithium dans du carbonate de propylène ayant une concentration en perchlorate de lithium de 2 $mol.l^{-1}$.

Exemple 1

Dans cet exemple, la matière active positive 5 est constituée par un film de polypyrrole de 10 µm d'épaisseur qui a été fabriqué par polymérisation électrolytique dans les conditions données précédemment. La matière active négative 11 est constituée par une couche de polypyrrole de 5 µm déposée sur le support en acier inoxydable 13 et recouverte d'un deuxième dépôt de lithium obtenu par électrolyse de perchlorate de lithium dans du carbonate de propylène.

Dans le compartiment 15 et l'électrode positive, on ajoute $10^{-2}$ $mol.l^{-1}$ de ferrocène et dans le compartiment 17 de l'électrode négative, on ajoute $2.10^{-2}$ $mol.l^{-1}$ de benzophénone.

Ce générateur présente une force électromotrice de 3,4 volts avec une densité de courant d'environ 1,2 $mA/cm^2$.

Exemple 2

Dans cet exemple, la matière active positive 5 est constituée par un film de polyacéthylène de 100 µm préparé selon la méthode de Shirakawa et la matière active négative 11 est constituée par du lithium. On ajoute à l'électrolyte du compartiment 15 du dicarbométhoxy-1,1'-ferrocène à la concentration de $10^{-2}$ $mol.l^{-1}$.

Ce générateur présente une force électromotrice de 3,9 volts avec une densité de courant de 1,3 $mA/cm^2$.

Exemple 3

Dans cet exemple, la matière active positive 5 est constituée par un film de polyaniline de 100 µm et la matière active 11 de l'électrode négative est constituée par du lithium. On adjoute $5.10^{-3}$ $mol.l^{-1}$ de N-méthylphéno-thiazine dans l'électrolyte du compartiment 15 de l'électrode positive.

Ce générateur présente une force électromotrice de 3,8 volts avec une densité de courant de 1,4 $mA/cm^2$.

Exemple 4

Dans cet exemple, le collecteur de courant 13 est en graphite au lieu d'être en acier inoxydable et la matière active négative 11 est constituée par un premier dépôt de polyaniline de 10 µm et par un deuxième dépôt de lithium obtenu par électrolyse. La matière active positive 5 est dans ce cas un film de polypyrrole de 10 µm. On ajoute à l'électrolyte du compartiment (15) $10^{-2}$ $mol.l^{-1}$ de ferrocène et on ajoute à l'électrolyte du compartiment (17) $5.10^{-3}$ $mol.l^{-1}$ de 9,10-anthraquinone.

Ce générateur présente une force électromotrice de 3,7 volts avec une densité de courant de 1,1 $mA/cm^2$.

Exemple 5

La matière active négative 11 est constituée par un film de polyacétylène de 200 µm préparé selon la méthode de Shirikawa et recouvert de lithium et la matière active positive 5 est constituée par un film de polypyrrole de 10 µm. On ajoute à l'électrolyte du compartiment (17) $10^{-2}$ $mol.l^{-1}$ de dinitromésitylène.

Ce générateur présente une force électromotrice de 2,5 volts avec une densité de courant de 1,15 $mA/cm^2$.

Exemple 6

La matière active positive 5 est constituée par une plaque de polyphénylène préparée classiquement par voie chimique et frittée sous une pression de 4 tonnes, l'épaisseur de cette plaque étant d'environ 500

µm. La matière active négative 11 est constituée par du lithium et on ajoute $10^{-2}$ mol.$l^{-1}$ de trinitrotriphénylamine dans l'électrolyte du compartiment 15.

Ce générateur présente une force électromotrice de 4 volts avec une densité de courant de 1,2 mA/$cm^2$.

Exemple 7

La matière active positive 5 est constituée par un film de polythiophène de 150 µm déposé par électrolyse à partir d'acétonitrile contenant $10^{-2}$ mol.$l^{-1}$ de bithiophène. La matière active négative est constituée par du lithium et on ajoute $10^{-2}$ mol.$l^{-1}$ de thianthrène à l'électrolyte du compartiment 15.

Ce générateur présente une force électromotrice de 4,1 volts et une densité de courant de 1,2 mA/$cm^2$.

**Revendications**

1. Générateur électrochimique comprenant un compartiment d'électrode positive (15) et un compartiment d'électrode négative (17) séparés par une membrane semi-perméable (7) et contenant respectivement une matière active positive d'électrode (5), une matière active negative de'electrode (11) et un électrolyte, la matière active d'électrode (5 ou 11) de l'un au moins desdits compartiments étant constituée par un polymère organique conducteur électronique, caractérisé en ce que, dans le compartiment de l'électrode positive, la masse active positive d'électrode est un polymère organique ayant une épaisseur d'au moins 10 µm et en ce que l'électrolyte de ce compartiment comprend $10^{-3}$ à 1 mol/l d'un composé électroactif soluble dans l'électrolyte et ayant un potentiel d'oxydoréduction dont l'écart avec le potentiel d'oxydoréduction du polymère organique de ce compartiment est d'au plus ± 500 mV, le composé électroactif étant choisi parmi le ferrocène et ses dérivés, les dérivés méthoxylés du benzène, les hydrazines de formule

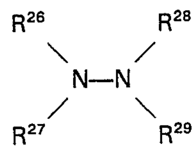

dans laquelle $R^{26}$, $R^{27}$, $R^{28}$ et $R^{29}$ qui peuvent être identiques ou différents représentent un radical alkyle ou phényle, le diphényl-9,10-anthracène et ses dérivés méthoxylés, le di-naphthyl-9,10-anthracène et ses dérivés méthoxylés, les composés hétérocycliques aromatiques et les amines aromatiques.

2. Générateur électrochimique comprenant un compartiment d'électrode positive (15) et un compartiment d'électrode négative (17) séparés par une membrane semi-perméable (7) et contenant respectivement une matière active positive d'électrode (5), une matière active négative d'électrode (11) et un électrolyte, la matière active d'électrode (5 ou 11) de l'un au moins desdits compartiments étant constituée par un polymère organique, conducteur électronique, caractérisé en ce que dans le compartiment de l'électrode négative, la matière active négative d'électrode est un polymère organique ayant une épaisseur d'au moins 10 µm et en ce que l'électrolyte de ce compartiment comprend $10^{-3}$ à 1 mol/l d'un composé électroactif, soluble dans l'électrolyte et ayant un potentiel d'oxydoréduction dont l'écart avec le potentiel d'oxydoréduction du polymère organique de ce compartiment est d'au plus ± 500 mV, le composé électroactif étant choisi parmi les hydrocarbures aromatiques polycycliques, les dérivés quinoniques, les dérivés nitrés aromatiques substitués par des groupes alkyle, et le ferrocène phénylcétone.

3. Générateur électrochimique selon la revendication 1, caractérisé en ce que le composé électroactif est un ferrocène répondant à la formule:

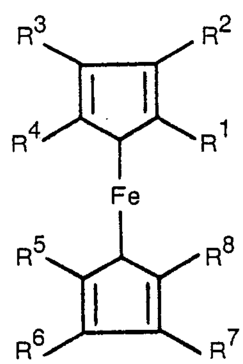

(I)

dans laquelle $R^1$, $R^2$, $R^3$, $R^4$, $R^5$, $R^6$, $R^7$ et $R^8$ qui peuvent être identiques ou différents représentent l'hydrogène, $NO_2$, $SO_2$, CN, $OCH_3$, Cl, F, SCN, OCN,

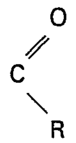, 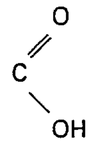, 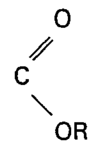, $SO_2R$, 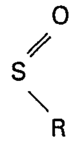, 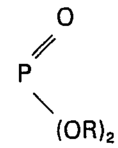,

OR, SR ou R avec R représentant un radical alkyle ou aryle.

4. Générateur électrochimique selon la revendication 1, caractérisé en ce que le composé électroactif est un dérivé méthoxylé du benzène de formule:

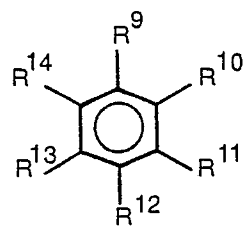

(II)

dans laquelle $R^9$, $R^{10}$, $R^{11}$, $R^{12}$, $R^{13}$, $R^{14}$ qui peuvent être identiques ou différents, représentent l'hydrogène, un radical méthyle ou un radical méthoxy à condition que l'un au moins des $R^9$, $R^{10}$, $R^{11}$, $R^{12}$, $R^{13}$, $R^{14}$ représente le radical méthoxy.

5. Générateur électrochimique selon la revendication 1, caractérisé en ce que le compose électroactif est un composé hétérocyclique aromatique de formule:

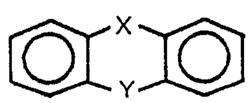

(III)

dans laquelle X et Y qui peuvent être identiques ou différents, représentent NH, N-phényle, N-alkyl, O ou S.

6. Générateur électrochimique selon la revendication 5, caractérisé en ce que le composé hétérocyclique aromatique est la phénothiazine.

7. Générateur électrochimique selon la revendication 1, caractérisé en ce que le composé électroactif est une triphénylamine de formule:

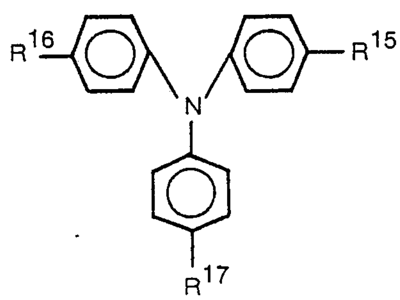

(IV)

dans laquelle $R^{15}$, $R^{16}$ et $R^{17}$ qui peuvent être identiques ou différents, représentent l'hydrogène, Cl, Br, F, $NO_2$, $OCH_3$, $SO_2$, CN, SCN, OCN,

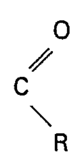, $SO_2R$, 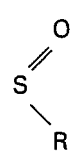, 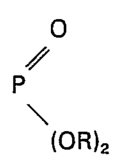, 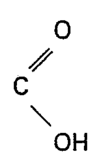, 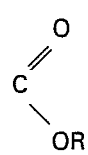,

OR, SR ou R avec R représentant un groupe alkyle ou aryle.

8. Générateur électrochimique selon la revendication 1, caractérisé en ce que le composé électroactif est une benzidine de formule:

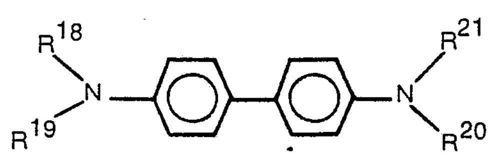

(V)

dans laquelle $R^{18}$, $R^{19}$, $R^{20}$, $R^{21}$ qui peuvent être identiques ou différents représentent l'hydrogène, un groupe alkyle ou un radical phényle.

9. Générateur électrochimique selon la revendication 1, caractérisé en ce que le composé électroactif est une paraphénylène diamine de formule:

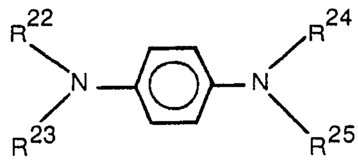

(VI)

dans laquelle $R^{22}$, $R^{23}$, $R^{24}$ et $R^{25}$ qui peuvent être identiques ou différents représentent l'hydrogène, un groupe alkyle ou un groupe phényle.

10. Générateur électrochimique selon la revendication 9, caractérisé en ce que le composé électroactif est la tetraphénylparaphénylènediamine.

12. Générateur électrochimique selon l'une quelconque des revendications 1 à 11, caractérisé en ce que l'électrolyte est une solution d'au moins un sel de lithium dans un solvant organique.

13. Générateur électrochimique selon la revendication 12, caractérisé en ce que le sel de lithium est le perchlorate de lithium.

**Patentansprüche**

1. Elektrochemischer Generator, der umfaßt ein Abteil für eine positive Elektrode (15) und ein Abteil für eine negative Elektrode (17), die durch eine semipermeable Membran (7) voneinander getrennt sind und jeweils ein aktives positives Elektrodenmaterial (5), ein aktives negatives Elektrodenmaterial (11) und einen Elektrolyten enthalten, wobei das aktive Elektrodenmaterial (5 oder 11) mindestens eines der Abteile aus einem organischen Polymer-Elektronenleiter besteht, dadurch gekennzeichnet, daß in dem Abteil für die positive Elektrode die aktive positive Elektrodenmasse ein organisches Polymeres mit einer Dicke von mindestens 10 µm ist und daß der Elektrolyt dieses Abteils $10^{-3}$ bis 1 Mol/l einer elektrisch aktiven Verbindung enthält, die in dem Elektrolyten löslich ist und ein Redoxpotential aufweist, dessen Differenz zum Redoxpotential des organischen Polymeren dieses Abteils höchstens $\pm$ 500 mV beträgt, wobei die elektrisch aktive Verbindung ausgewählt wird aus Ferrocen und seinen Derivaten, den methoxylierten Derivaten von Benzol, den Hydrazinen der Formel

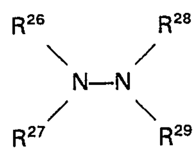

worin $R^{26}$, $R^{27}$, $R^{28}$ und $R^{29}$, die gleich oder verschieden sein können, einen Alkyl- oder Phenylrest darstellen, Di-phenyl-9,10-anthracen und seinen methoxylierten Derivaten, Di-naphthyl-9,10-anthracen und seinen methoxylierten Derivaten, aromatischen heterocyclischen Verbindungen und aromatischen Aminen.

2. Elektrochemischer Generator, der ein Abteil für eine positive Elektrode (15) und ein Abteil für eine negative Elektrode (17) umfaßt, die durch eine semipermeable Membran (7) voneinander getrennt sind und jeweils ein aktives positives Elektrodenmaterial (5), ein aktives negatives Elektrodenmaterial (11) und einen Elektrolyten enthalten, wobei das aktives Elektrodenmaterial (5 oder 11) mindestens eines der genannten Abteile aus einem organischen Polymeren als Elektronenleiter besteht, dadurch gekennzeichnet, daß in dem Abteil für die negative Elektrode das aktive negative Elektrodenmaterial ein organisches Polymeres mit einer Dicke von mindestens 10 µm ist und daß der Elektrolyte dieses Abteils $10^{-3}$ bis 1 Mol/l einer elektrisch aktiven Verbindung enthält, die in dem Elektrolyten löslich ist und ein Redoxpotential hat, dessen Differenz zu dem Redoxpotential des organischen Polymeren dieses Abteils höchstens $\pm$ 500 mV beträgt, wobei die elektrisch aktive Verbindung ausgewählt wird aus polycyclischen aromatischen Kohlenwasserstoffen, Chinonderivaten, aromatischen Nitroderivaten, die durch Alkylgruppen substituiert sind, und Ferrocenphenylketon.

3. Elektrochemischer Generator nach Anspruch 1, dadurch gekennzeichnet, daß die elektrisch aktive Verbindung ein Ferrocen der Formel ist:

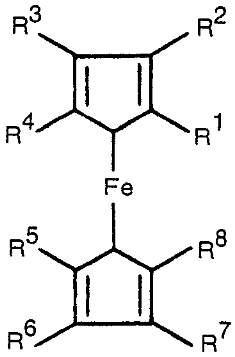

(I)

worin $R^1$, $R^2$, $R^3$, $R^4$, $R^5$, $R^6$, $R^7$ und $R^8$, die gleich oder verschieden sein können, Wasserstoff, $NO_2$, $SO_2$, CN, $OCH_3$, Cl, F, SCN, OCN,

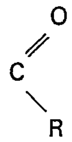 , 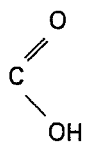 , 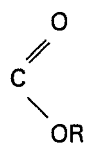 , $SO_2R$, 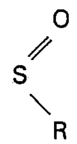 , 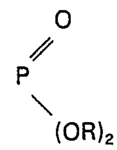 ,

OR, SR oder R darstellen, wobei R einen Alkyl- oder Arylrest bedeutet.

4. Elektrochemischer Generator nach Anspruch 1, dadurch gekennzeichnet, daß die elektrisch aktive Verbindung ein methoxyliertes Derivat von Benzol der Formel ist:

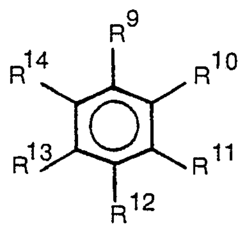

(II)

worin $R^9$, $R^{10}$, $R^{11}$, $R^{12}$, $R^{13}$, $R^{14}$, die gleich oder verschieden sein können, Wasserstoff, einen Methylrest oder einen Methoxyrest bedeuten, mit der Maßgabe, daß mindestens einer der Reste $R^9$, $R^{10}$, $R^{11}$, $R^{12}$, $R^{13}$, $R^{14}$ den Methoxyrest darstellt.

5. Elektrochemischer Generator nach Anspruch 1, dadurch gekennzeichnet, daß die elektrisch aktive Verbindung eine aromatische heterocyclische Verbindung der Formel ist:

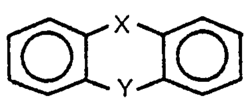

(III)

worin X und Y, die gleich oder verschieden sein können, NH, N-Phenyl, N-Alkyl, O oder S darstellen.

6. Elektrochemischer Generator nach Anspruch 5, dadurch gekennzeichnet, daß die aromatische heterocyclische Verbindung das Phenothiazin ist.

7. Elektrochemischer Generator nach Anspruch 1, dadurch gekennzeichnet, daß die elektrisch aktive Verbindung ein Triphenylamin der Formel ist:

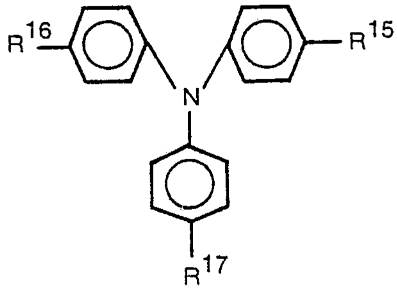

(IV)

worin $R^{15}$, $R^{16}$ und $R^{17}$, die gleich oder verschieden sein können, Wasserstoff, Cl Br, F, $NO_2$, $OCH_3$, $SO_2$, CN, SCN, OCN,

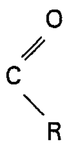 , $SO_2R$, 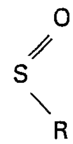 , 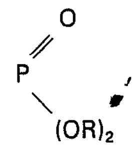 , 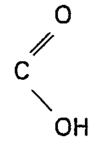 , 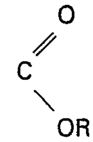 ,

OR, SR oder R darstellen, wobei R eine Alkyl- oder Arylgruppe bedeutet.

8. Elektrochemischer Generator nach Anspruch 1, dadurch gekennzeichnet, daß die elektrisch aktive Verbindung ein Benzidin der Formel ist:

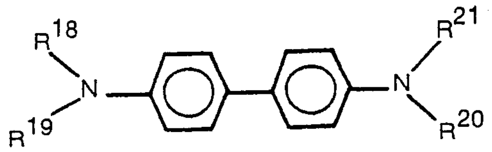 (V)

worin $R^{18}$, $R^{19}$, $R^{20}$ und $R^{21}$, die gleich oder verschieden sein können, Wasserstoff, eine Alkylgruppe oder eine Phenylgruppe bedeuten.

9. Elektrochemischer Generator nach Anspruch 1, dadurch gekennzeichnet, daß die elektrisch aktive Verbindung ein p-Phenylendiamin der Formel ist:

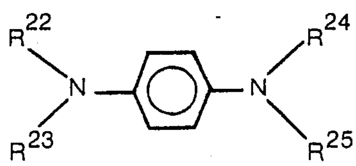 (VI)

worin $R^{22}$, $R^{23}$, $R^{24}$ und $R^{25}$, die gleich oder verschieden sein können, Wasserstoff, eine Alkylgruppe oder eine Phenylgruppe bedeuten.

10. Elektrochemischer Generator nach Anspruch 9, dadurch gekennzeichnet, daß die elektrisch aktive Verbindung das Tetraphenyl-p-phenylendiamin ist.

11. Elektrochemischer Generator nach Anspruch 1, dadurch gekennzeichnet, daß das organische Polymere das Polypyrrol ist und daß die elektrisch aktive Verbindung das Ferrocen der Formel (I) ist, in der $R^1$, $R^2$, $R^3$, $R^4$, $R^5$, $R^6$, $R^7$ und $R^8$ Wasserstoff bedeuten.

12. Elektrochemischer Generator nach einem der Ansprüche 1 bis 11, dadurch gekennzeichnet, daß der Elektrolyte eine Lösung mindestens eines Lithiumsalzes in einem organischen Lösungsmittel ist.

13. Elektrochemischer Generator nach Anspruch 12, dadurch gekennzeichnet, daß es sich bei dem Lithiumsalz um das Lithiumperchlorat handelt.

## Claims

1. Electrochemical generator comprising a positive electrode compartment (15) and a negative electrode compartment (17) separated by a semipermeable diaphragm (7) and respectively containing a positive electrode active material (5), a negative electrode active material (11) and an electrolyte, the active electrode material (5 or 11) of at least one of said compartments being constituted by an electronically conductive organic polymer and is characterized in that, in the positive electrode compartment, the positive electrode active material is an organic polymer having a thickness of at least 10 µm and in that the electrolyte of said compartment comprises $10^3$ to 1 mole/l of an electroactive compound soluble in the electrolyte and having a redox potential, whose difference compared with the redox potential of the organic polymer of said compartment is at the most ± 500 mV, the electroactive compound being chosen from among ferrocene and its derivatives, the methoxylated derivatives of benzene, the hydrazines of formula:

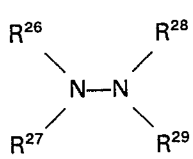

in which $R^{26}$, $R^{27}$, $R^{28}$ and $R^{29}$, which can be the same or different, represent an alkyl or phenyl radical, 9-diphenyl-10-anthracene and its methoxylated derivatives, di-9-naphthyl-10-anthracene and its methoxylated derivatives, the aromatic heterocyclic compounds and the aromatic amines.

2. Electrochemical generator comprising a positive electrode compartment (15) and a negative electrode compartment (17) separated by a semipermeable diaphragm (7) and respectively containing a positive electrode active material (5), a negative electrode active material (11) and an electrolyte, the active electrode material (5 or 11) of at least one of said compartments being constituted by an electronically conductive organic polymer and is characterized in that, in the negative electrode compartment, the negative electrode active material is an organic polymer having a thickness of at least 10 µm and in that the electrolyte of said compartment comprises $10^3$ to 1 mole/l of an electroactive compound soluble in the electrolyte and having a redox potential, whose difference compared with the redox potential of the organic polymer of said compartment is at the most $\pm$ 500 mV, the electroactive compound being chosen from among the polycyclic aromatic hydrocarbons, the quinone derivatives, the aromatic nitro derivatives substituted by alkyl groups and phenyl ketone ferrocene.

3. Electrochemical generator according to claim 1, characterized in that the electroactive compound is a ferrocene in accordance with formula:

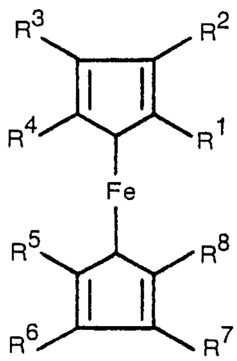

(I)

in which $R^1$, $R^2$, $R^3$, $R^4$, $R^5$, $R^6$, $R^7$ and $R^8$, which can be the same or different, represent hydrogen, $NO_2$, $SO_2$, CN, $OCH_3$, Cl, F, SCN, OCN,

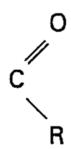 , 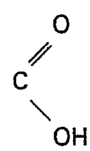 , $SO_2R$, 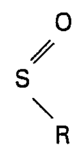 , 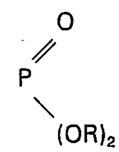 ,

OR, SR or R, and R representing an alkyl or aryl radical.

4. Electrochemical generator according to claim 1, characterized in that the electroactive compound is a methoxylated derivative of benzene of formula:

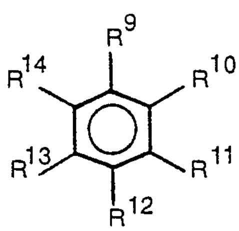

(II)

in which $R^9$, $R^{10}$, $R^{11}$, $R^{12}$, $R^{13}$, $R^{14}$, which can be the same or different, represent hydrogen, a methyl radical or a methoxy radical, provided that at least of the $R^9$, $R^{10}$, $R^{11}$, $R^{12}$, $R^{13}$, $R^{14}$, represent the methoxy radical.

5. Electrochemical generator according to claim 1, characterized in that the electroactive compound is an aromatic heterocyclic compound of formula:

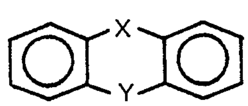

(III)

in which X and Y, which can be the same or different, represent NH,N-phenyl, N-alkyl, O or S.

6. Electrochemical generator according to claim 5, characterized in that the aromatic heterocyclic compound is phenothiazine.

7. Electrochemical generator according to claim 1, characterized in that the electroactive compound is a triphenylamine of formula:

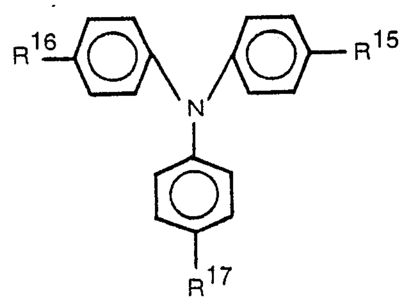

(IV)

in which $R^{15}$, $R^{16}$ and $R^{17}$, which can be the same or different, represent hydrogen Cl Br, F, $NO_2$, $OCH_3$, $SO_2$, CN, SCN, OCN,

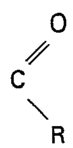 , $SO_2R$, 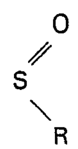 , 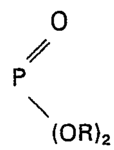 , 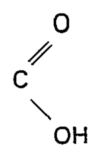 , 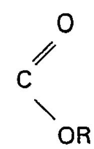 ,

OR, SR or R with R representing an alkyl or aryl group.

8. Electrochemical generator according to claim 1, characterized in that the electroactive compound is a benzidene of formula:

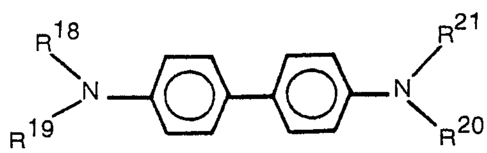

(V)

in which $R^{18}$, $R^{19}$, $R^{20}$ and $R^{21}$, which can be the same or different, represent hydrogen, alkyl group or a phenyl group.

9. Electrochemical generator according to claim 1, characterized in that the electroactive compound is a paraphenyldiamine of formula:

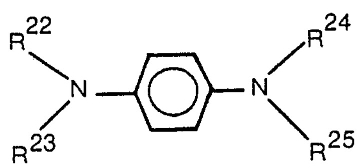

(VI)

in which $R^{22}$, $R^{23}$, $R^{24}$ and $R^{25}$, which can be the same or different, represent hydrogen, an alkyl group or a phenyl group.

10. Electrochemical generator according to claim 9, characterized in that the electroactive compound is tetraphenylparaphenylene-diamine.

11. Electrochemical generator according to claim 1, characterized in that the organic polymer is polypyrrole and the electroactive compound is ferrocene of formula (I) in which $R^1$, $R^2$, $R^3$, $R^4$, $R^5$, $R^6$, $R^7$ and $R^8$ represent hydrogen.

12. Electrochemical generator according to any one of the claims 1 to 11, characterized in that the electrolyte is a solution of at least one lithium salt in an organic solvent.

13. Electrochemical generator according to claim 12, characterized in that the lithium salt is lithium perchlorate.

FIG.1

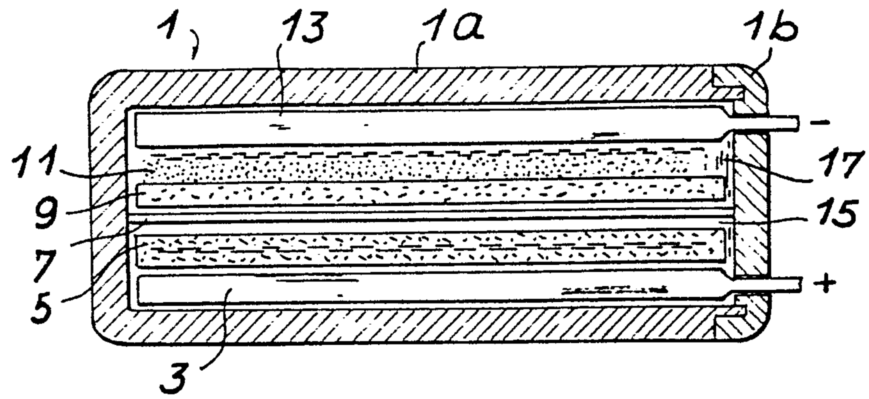
1
13
1a
1b
-
11
17
9
15
7
5
+
3

FIG.2

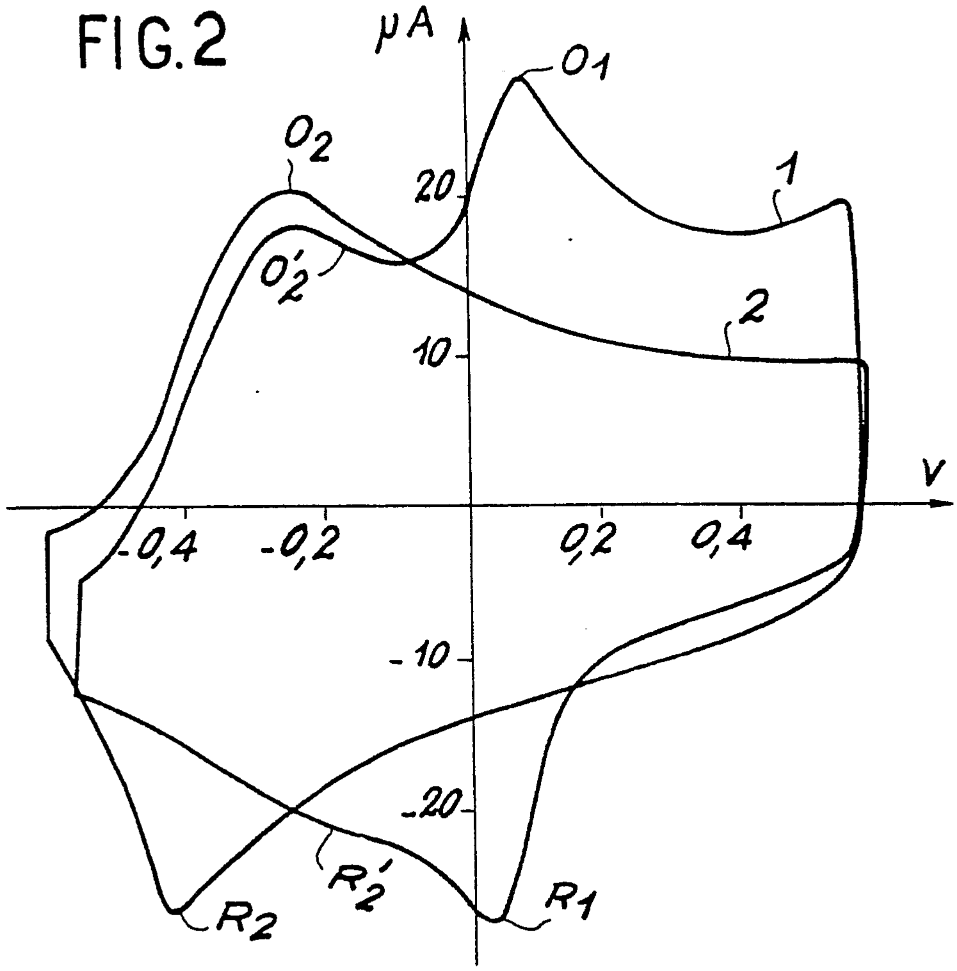
µA
O1
O2
O'2
20
1
10
2
V
-0,4
-0,2
0,2
0,4
-10
-20
R2
R'2
R1